# EUROPÄISCHE PATENTSCHRIFT

(11) **EP 3 603 893 B1**
(45) Veröffentlichungstag und Bekanntmachung des Hinweises auf die Patenterteilung: **05.05.2021**
(21) Anmeldenummer: 19165109.0
(22) Anmeldetag: 26.03.2019
(51) Int. Cl.: B25F 3/00, B23Q 5/04, B25F 5/00, B25G 1/12

(54) **ZUBEHÖRTEIL**
ACCESSORY PART
ACCESSOIRE

(30) Priorität: 30.07.2018 DE 102018118323
(43) Veröffentlichungstag der Anmeldung: 05.02.2020
(73) Patentinhaber: C. & E. Fein GmbH, 73529 Schwäbisch Gmünd-Bargau (DE)
(72) Erfinder: Simma, Tobias, 88484 Gutenzell-Hürbel (DE); Woecht, Norbert, 73529 Schwäbisch Gmünd-Bargau (DE); Höppner, Johannes, 73529 Schwäbisch Gmünd-Bargau (DE)
(74) Vertreter: Wallinger, Michael

(56) Entgegenhaltungen:
- DE-A1-102015 200 831
- DE-A1-102016 104 075
- US-A1- 2015 096 778

## Beschreibung

Die Erfindung betrifft ein Zubehörteil für eine Handwerkzeugmaschine, mit einer Arretierung zum lösbaren Koppeln einer eine Zubehörlängsachse definierenden Zubehörspindel an einer Abtriebswelle der Handwerkzeugmaschine, wobei die Arretierung eine Stellhülse, die zwischen einer Arretierungsstellung und einer Lösestellung verstellbar an einem Gehäuse der Zubehörspindel gelagert ist, und mindestens ein an der Zubehörspindel zwischen einer ausgerückten ersten Stellung und einer eingerückten zweiten Stellung verstellbar gelagertes Arretierungsmittel umfasst zur lösbaren Verbindung der Zubehörspindel mit der Abtriebswelle.

Ein derartiges Zubehörteil geht beispielsweise aus der DE 10 2015 200 831 A1 hervor.

Aus dem Stand der Technik ist es beispielsweise bei Bohrschraubern bekannt, dem Nutzer unterschiedliche Zubehörteile bereitzustellen, die dieser auf den Bohrschrauber aufsetzen kann, um damit unterschiedliche Arbeiten erledigen zu können. Zur Koppelung muss durch den Nutzer lediglich die Stellhülse in die Lösestellung überführt werden. Dabei wird das mindestens eine Arretierungsmittel so verstellt, dass das Zubehörteil auf die Abtriebswelle aufgesetzt werden kann. Danach kann der Nutzer die Stellhülse wieder aus der Lösestellung in die Arretierstellung überführen, wodurch das Zubehörteil durch das mindestens eine Arretierungsmittel an der Abtriebswelle gesichert wird. Hierbei besteht jedoch häufig das Problem, dass bei der Koppelung beim Aufsetzen des Zubehörteils auf die Abtriebswelle der Handwerkzeugmaschine die Orientierung der zur Koppelung vorgesehenen Zubehörspindel nicht fluchtend zu der Abtriebswelle ausgerichtet ist. Daher muss das Zubehörteil durch den Nutzer relativ zu der Handwerkzeugmaschine um die Zubehörlängsachse, die durch die Zubehörspindel definiert ist, soweit verdreht werden, bis die Zubehörspindel fluchtend zu der Abtriebswelle ausgerichtet ist. Erst dann kann das Zubehörteil auf die Abtriebswelle der Handwerkzeugmaschine aufgesetzt werden. Hierbei hat es sich jedoch als nachteilig erwiesen, dass sich beim Verdrehen des Zubehörteils um die Zubehörlängsachse relativ zu der Handwerkzeugmaschine die in dem Gehäuse aufgenommene Zubehörspindel gegenüber dem Gehäuse häufig verdreht, was ein Koppeln des Zubehörteils an der Handwerkzeugmaschine weiter erschwert.

Der vorliegenden Erfindung liegt daher die Aufgabe zugrunde, die oben genannten Nachteile zu reduzieren und ein verbessertes Zubehörteil für eine Handwerkzeugmaschine bereitzustellen, das sich vereinfacht mit einer Handwerkzeugmaschine koppeln lässt, insbesondere mit deren Abtriebswelle.

Diese Aufgabe wird gemäß der Erfindung bei einem Zubehörteil der eingangs genannten Art dadurch gelöst, dass ein Kopplungselement vorgesehen ist, das zwischen einer Kopplungsstellung, in der die Zubehörspindel mit dem Gehäuse drehfest verbunden ist, und einer Freigabestellung verstellbar ist, in der die Zubehörspindel relativ zu dem Gehäuse verdrehbar ist.

Durch das in der Kopplungsstellung befindliche Kopplungselement wird die Zubehörspindel mit dem Gehäuse drehfest verbunden, so dass eine Relativdrehung zwischen der Zubehörspindel und dem Gehäuse beim Koppeln des Zubehörteils mit der Abtriebswelle unterbunden ist. Hierdurch kann das Zubehörteil besonders einfach mit dem Handwerkzeug gekoppelt werden, da beim Ausrichten des Zubehörteils auf die Abtriebswelle eine Verdrehung der Zubehörspindel relativ zu dem Gehäuse effektiv ausgeschlossen ist. Nach dem Koppeln des Zubehörteils mit der Handwerkzeugmaschine kann dann die drehfeste Verbindung zwischen dem Gehäuse und der Zubehörspindel wieder aufgehoben werden, indem das Kopplungselement aus der Kopplungsstellung wieder in die Freigabestellung überführt wird. Wenn sich die drehfest mit dem Gehäuse verbundene und daran entlang der Zubehörlängsachse axial verschiebbar gelagerte Stellhülse in der Lösestellung befindet, so ist das Kopplungselement in der Kopplungsstellung. Wenn sich die Stellhülse hingegen in der Arretierstellung befindet, so ist das Kopplungselement in der Freigabestellung. Insbesondere ist es dabei vorgesehen, dass beim Verstellen der Stellhülse zwischen der Arretierstellung und der Lösestellung das Kopplungselement simultan verstellt wird und zwar zwischen der Freigabestellung und der Kopplungsstellung. Eine vereinfachte Handhabung ergibt sich zudem auch dann, wenn mindestens ein in der Lösestellung auf die Stellhülse einwirkendes Federelement vorgesehen ist.

Bewährt hat es sich auch, wenn an dem Kopplungselement eine Kopplungsstruktur ausgebildet ist zur Wechselwirkung mit einer korrespondierenden Gegenkontur. Durch die Verwendung der Kopplungsstruktur und der korrespondierenden Gegenkontur lässt sich durch das Kopplungselement auf einfache Art und Weise die Zubehörspindel drehfest mit dem Gehäuse verbinden. In diesem Zusammenhang wird darauf hingewiesen, dass die Gegenkontur entweder an dem Gehäuse oder aber an der Zubehörspindel ausgebildet sein kann.

In diesem Zusammenhang hat es sich als besonders günstig erwiesen, wenn die Kopplungsstruktur und/oder die Gegenkontur eine Verzahnung aufweist. Durch die Verwendung der Verzahnung, die in einem bevorzugten Ausführungsbeispiel sowohl an der Kopplungsstruktur als auch an der Gegenkontur ausgebildet ist, lässt sich die drehfeste Verbindung zwischen der Zubehörspindel und dem Gehäuse besonders einfach erreichen. Hierbei hat es sich als vorteilhaft gezeigt, wenn die Zahnflanken der Zähne der Verzahnung zu der Zubehörlängsachse einen Winkel aufweisen, der zwischen 10° und 70° und besonders bevorzugt bei 65° liegt. Hierdurch lässt sich der Verzahnungseingriff zwischen den Bauteilen besonders einfach herstellen, da die einzelnen Zähne dann leichter zueinander finden.

Eine Kopplung zwischen dem Kopplungselement und dem Gehäuse wird auch dadurch erleichtert, dass das Verhältnis zwischen der Anzahl der Zähne der Verzahnung der Kopplungsstruktur und der Verzahnung der Gegenkontur kleiner ist als 1,0 und bevorzugt kleiner als 0,5.

Als besonders vorteilhaft hat es sich auch gezeigt, wenn das Kopplungselement als eine Kopplungshülse gebildet ist, die drehfest mit der Zubehörspindel verbunden ist und an dieser zwischen der Kopplungsstellung und der Freigabestellung axial verstellbar gelagert ist. In diesem Fall ist dann die Gegenkontur dem Gehäuse zugeordnet. Im Rahmen der Erfindung ist es jedoch auch vorgesehen, dass das Kopplungselement permanent drehfest und axial verschiebbar mit dem Gehäuse verbunden oder integral mit der Stellhülse gebildet ist. In diesem Fall ist die Gegenkontur dann an der Zubehörspindel ausgebildet.

Außerdem hat es sich auch bewährt, wenn zwischen der Kopplungshülse und der Zubehörspindel ein Rückstellelement derartig angeordnet ist, dass in der Kopplungsstellung eine Rückstellkraft auf die Kopplungshülse ausgeübt wird. Hierdurch wird erreicht, dass die Kopplungshülse aus der Kopplungsstellung selbsttätig wieder in die Freigabestellung überführt wird. Auch wird hierdurch die Betriebssicherheit erhöht, da durch das Rückstellelement ein unbeabsichtigtes Verstellen der Kopplungshülse aus der Freigabestellung in die Kopplungsstellung effektiv verhindert wird. Eine derartige Verstellung während des Betriebs würde die Gefahr mit sich bringen, dass sich das Gehäuse des Zubehörteils mit der Zubehörspindel drehen würde, was zu einer Zerstörung des Zubehörteils führen könnte.

Im Zusammenhang mit dem Rückstellelement hat es sich als besonders vorteilhaft gezeigt, wenn in der Kopplungshülse ein Aufnahmeraum für das Rückstellelement ausgebildet ist, der einenends durch mindestens einen innenumfangsseitig ausgebildeten Führungsabschnitt und anderenends durch mindestens einen Ringbundabschnitt begrenzt ist. Hierdurch lässt sich insbesondere das Rückstellelement für die Montage in den Aufnahmeraum der Kopplungshülse einsetzen. Durch den mindestens einen Führungsabschnitt lässt sich zudem die Kopplungshülse drehfest mit der Zubehörspindel verbinden. Hierbei können die Führungsabschnitte, die an der Kopplungshülse ausgebildet sind, mit korrespondierenden Strukturen an der Zubehörspindel wechselwirken, um die beiden Bauteile drehfest miteinander zu verbinden. In diesem Zusammenhang hat es sich weiterhin auch bewährt, wenn sowohl der Führungsabschnitt als auch der Ringbundabschnitt jeweils mehrfach insbesondere zweifach vorgesehen ist. Wenn mehrere Führungsabschnitte vorgesehen sind, die durch Lücken voneinander beabstandet sind, so können diese Lücken verwendet werden, um eine Abstützung des Rückstellelements an der Zubehörspindel zu erreichen, wenn sich die Kopplungshülse in der Kopplungsstellung befindet.

Der Fertigungsaufwand lässt sich insbesondere dadurch weiter vereinfachen, dass das Gehäuse mehrteilig gebildet ist und ein Grundgehäuse und eine die Gegenkontur tragende Gehäusehülse umfasst. Somit lässt sich insbesondere zunächst die Zubehörspindel in das Grundgehäuse einsetzen, während die Gehäusehülse dann in einem zweiten Schritt auf die in dem Grundgehäuse befindliche Zubehörspindel aufgesetzt und an dem Grundgehäuse vorzugsweise mittels einer Schraubverbindung gesichert wird.

Als günstig hat es sich zudem auch erwiesen, wenn die Zubehörspindel mehrteilig gebildet ist und eine Werkzeugwelle und einen Trägerabschnitt mit mindestens einer Aufnahme umfasst, in der das mindestens eine Arretierungsmittel im Wesentlichen senkrecht zu der Zubehörlängsachse radial zwischen der ausgerückten ersten Stellung und der eingerückten zweiten Stellung verstellbar gelagert ist. In diesem Zusammenhang sei noch angemerkt, dass das mindestens eine Arretierungsmittel dabei von der der Zubehörlängsachse abgewandten Seite her in die korrespondierende Aufnahme des Trägerabschnitts eingesetzt wird, die dabei derartig ausgestaltet ist, dass das mindestens eine Arretierungsmittel in montiertem Zustand nicht soweit aus der Aufnahme in Richtung der Zubehörlängsachse hindurchtreten kann, dass dies verlorengehen könnte. Hierdurch wird ein Verlust des mindestens einen Arretierungsmittels effektiv verhindert. Das mindestens eine Arretierungsmittel ist dabei bevorzugt als eine Kugel ausgebildet und mehrfach vorgesehen, wodurch es möglich ist, zwischen der Zubehörspindel und der Abtriebswelle eine formschlüssige Verbindung herzustellen, indem an der Abtriebswelle außenumfangsseitig kalottenförmige Vertiefungen ausgebildet werden, in die die als Kugeln gebildeten Arretierungsmittel eingreifen können, wenn diese in den im Trägerabschnitt bereitgestellten Aufnahmen radial nach innen in die eingerückte Stellung verstellt werden.

Besonders bewährt hat es sich auch, wenn ein Stellring vorgesehen ist zur Verstellung des mindestens einen Arretierungsmittels aus der ausgerückten ersten Stellung in die eingerückte zweite Stellung. Dieser Stellring kann dabei insbesondere auch durch die Stellhülse verstellbar sein und eine der Kopplungshülse zuweisende Stirnfläche aufweisen, mit der die Kopplungshülse beaufschlagt und verstellt werden kann. Bevorzugt weist der Stellring dabei innenumfangsseitig eine Hinterschneidung auf, die zur Aufnahme des mindestens einen Arretierungsmittels in der ausgerückten ersten Stellung dient. Diese Hinterschneidung kann dabei einenends durch einen die Stirnfläche bildenden ersten Ringbund und anderenends durch einen zweiten Ringbund begrenzt sein.

Bewährt hat es sich außerdem auch, wenn an der Zubehörspindel ein Verbindungsabschnitt ausgebildet ist zur drehfesten Koppelung mit einem korrespondierenden Gegenabschnitt, der an der Abtriebswelle ausgebildet ist. Hierbei kann es sich beispielsweise um eine Sechskantverbindung handeln.

Als besonders günstig hat es sich auch erwiesen, wenn an der Stellhülse Vorsprünge ausgebildet sind zur drehfesten Kopplung der Stellhülse mit der Handwerkzeugmaschine. Insbesondere wenn die Stellhülse drehfest mit dem Gehäuse verbunden ist, lässt sich dadurch auch die Ausrichtung des gesamten Zubehörteils festlegen, was vor allem dann zum Tragen kommt und von Vorteil ist, wenn das Zubehörteil eine unsymmetrische Form aufweist.

Als vorteilhaft hat es sich auch gezeigt, wenn eine das Gehäuse zumindest teilweise umgreifende elektrische Isolationsschicht vorgesehen ist und/oder dass das Gehäuse aus einem elektrisch isolierenden Material gefertigt ist. Hierdurch wird insbesondere verhindert, dass das Gehäuse elektrisch leitend ist. Dies ist insbesondere dann relevant, wenn mit der Handwerkzeugmaschine gebohrt werden soll und wenn der Nutzer die Handwerkzeugmaschine auch an dem Gehäuse des Zubehörteils berührt. Bohrt der Nutzer nämlich dann eine stromführende Leitung an, so bestünde ansonsten die Gefahr eines potentiell tödlichen Stromschlags.

Bewährt hat es sich letztlich auch, wenn das Zubehörteil als ein Winkelkopf ausgebildet ist.

Im Folgenden wird die Erfindung an einem in den Zeichnungen dargestellten Ausführungsbeispiel näher erläutert; es zeigen:
- Fig. 1: einen Längsschnitt durch ein Zubehörteil für eine Handwerkzeugmaschine mit einer Stellhülse in Arretierstellung,
- Fig. 2: einen Längsschnitt durch das Zubehörteil mit der Stellhülse in Lösestellung,
- Fig. 3: einen Längsschnitt durch das Zubehörteil mit der Stellhülse in Arretierstellung und verbundener Abtriebswelle,
- Fig. 4: eine perspektivische, teilgeschnittene Ansicht einer Zubehörspindel des Zubehörteils,
- Fig. 5: eine perspektivische Ansicht einer Gehäusehülse, und
- Fig. 6: eine perspektivische Ansicht einer Kopplungshülse der Handwerkzeugmaschine.

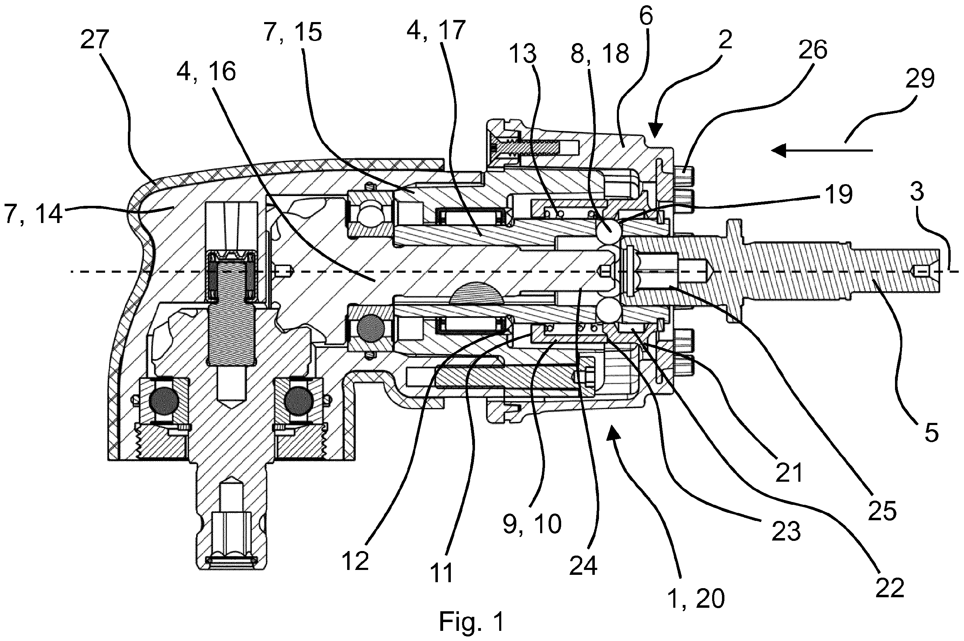

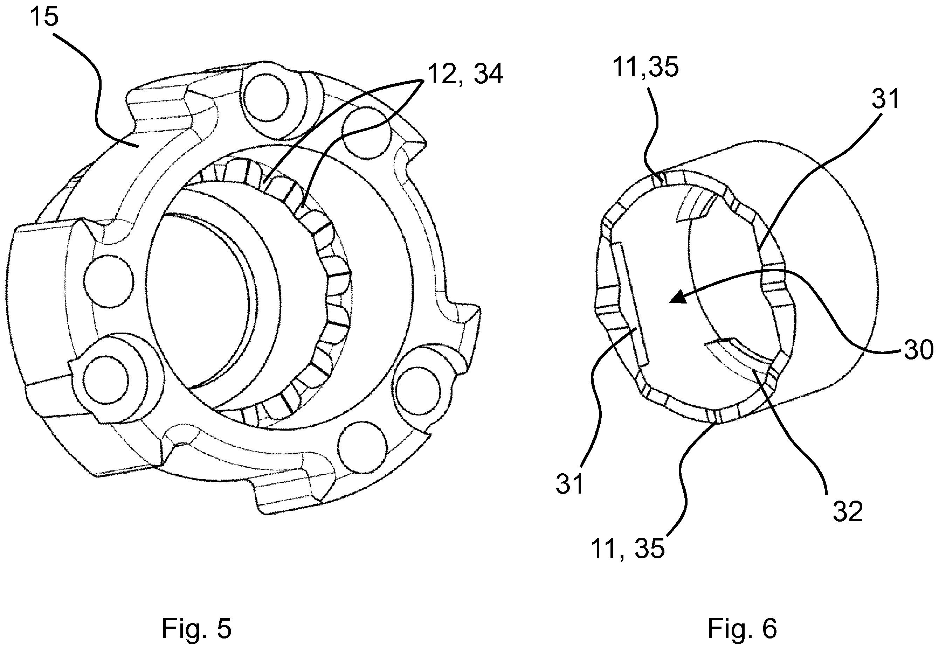

Figur 1 zeigt ein Zubehörteil 1 für eine Handwerkzeugmaschine, die als ein Winkelkopf 20 ausgeführt ist. Dieser weist eine Arretierung 2 auf zum lösbaren Verbinden einer eine Zubehörlängsachse 3 definierenden Zubehörspindel 4 an einer Abtriebswelle 5 der Handwerkzeugmaschine. Die Arretierung 2 umfasst dabei eine Stellhülse 6, die zwischen einer Arretierungsstellung und einer Lösestellung axial verstellbar und unverdrehbar an einem Gehäuse 7 gelagert ist. Weiterhin umfasst die Arretierung 2 mehrere an der Zubehörspindel 4 verstellbar gelagerte Arretierungsmittel 8, mit denen die Zubehörspindel 4 mit der Abtriebswelle 5 der Handwerkzeugmaschine lösbar gekoppelt werden kann. Zudem ist ein Kopplungselement 9 vorgesehen, das in dem gezeigten Ausführungsbeispiel als eine Kopplungshülse 10 ausgebildet ist. Diese Kopplungshülse 10 ist dabei zwischen einer Kopplungsstellung, in der die Zubehörspindel 4 mit dem Gehäuse 7 drehfest verbunden ist, und einer Freigabestellung axial verstellbar, in der die Zubehörspindel 4 relativ zu dem Gehäuse 7 verdrehbar ist. Die Kopplungshülse 10 ist dabei mit der Zubehörspindel 4 drehfest verbunden und an dieser axial verstellbar gelagert. Um in der Kopplungsstellung eine drehfeste Verbindung zwischen der Zubehörspindel 4 und dem Gehäuse 7 zu erreichen, ist an der Kopplungshülse 10 eine Kopplungsstruktur 11 ausgebildet, die mit einer korrespondierenden Gegenkontur 12 wechselwirkt, die an dem Gehäuse 7 ausgebildet ist, deren Zusammenspiel nachstehend insbesondere noch anhand der Figuren 5 und 6 näher erläutert wird.

Zwischen der Kopplungshülse 10 und der Zubehörspindel 4 ist in dem gezeigten Ausführungsbeispiel ein Rückstellelement 13 angeordnet, das in der Kopplungsstellung der Kopplungshülse 10 eine Rückstellkraft auf diese ausübt. Das Gehäuse 7 ist dabei mehrteilig gebildet und umfasst ein Grundgehäuse 14 sowie eine die Gegenkontur 12 tragende Gehäusehülse 15. Auch die Zubehörspindel 4 ist mehrteilig gebildet und weist eine Werkzeugwelle 16 sowie einen Trägerabschnitt 17 auf. In dem Trägerabschnitt 17 sind die als Kugeln 18 gebildeten Arretierungsmittel 8 in entsprechenden Aufnahmen 19 aufgenommen und im Wesentlichen senkrecht zu der durch die Zubehörspindel 4 definierte Zubehörlängsachse 3 radial zwischen einer ausgerückten ersten Stellung und einer eingerückten zweiten Stellung verstellbar gelagert. Die Verstellung der Arretierungsmittel 8 erfolgt dabei über einen Stellring 21, der bei der Verstellung der Stellhülse 6 ebenfalls entlang der Zubehörlängsachse 3 verstellt wird. Der Stellring 21 weist dabei eine Hinterschneidung 22 auf, in die die Arretierungsmittel 8 in der ausgerückten ersten Stellung eingreifen. Mit einer Stirnfläche 23 beaufschlagt der Stellring 21 dabei die Kopplungshülse 10, um diese aus der Freigabestellung in die Kopplungsstellung gegen die Kraft des Rückstellelements 13 zu verschieben. Wie der Figur 1 weiterhin zu entnehmen ist, ist an der Zubehörspindel 4 - und zwar im Bereich der Werkzeugwelle 16 - ein Verbindungsabschnitt 24 ausgebildet, der beim Aufsetzen des Zubehörteils 1 auf die Abtriebswelle 5 mit einem korrespondierenden Gegenabschnitt 25 wechselwirkt, der an der Abtriebswelle 5 ausgebildet ist. Der Verbindungsabschnitt 24 ist dabei als ein Außensechskant gebildet, der in den als Innensechskant gebildeten Gegenabschnitt 25 eingreift, wenn das Zubehörteil 1 auf die Handwerkzeugmaschine aufgesetzt wird. Auch ist der Figur 1 zu entnehmen, dass an der der Abtriebswelle 5 zugewandten Stirnseite der Stellhülse 6 Vorsprünge 26 ausgebildet sind, die eine drehfeste Kopplung der Stellhülse 6 und des damit drehfest verbundenen Gehäuses 7 des Zubehörteils 1 mit der Handwerkzeugmaschine erlauben. An dem Gehäuse 7 ist zudem eine elektrische Isolationsschicht 27 angeordnet, die das Gehäuse 7 in weiten Teilen umgreift.

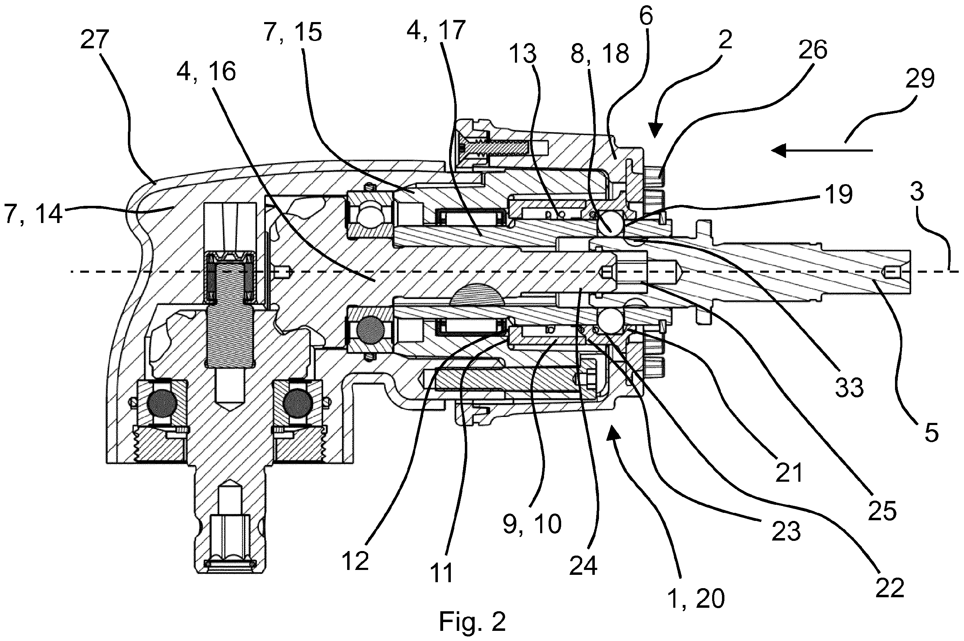

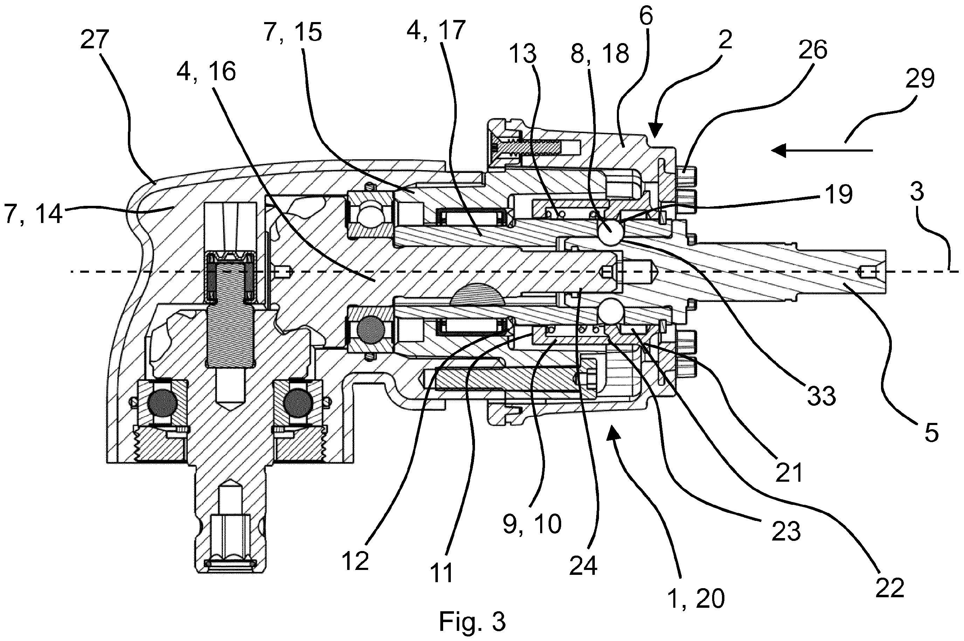

Aus der in der Figur 1 dargestellten Konfiguration wird deutlich, dass der Verbindungsabschnitt 24 der Zubehörspindel 4 des Zubehörteils 1 nicht fluchtend zu dem Gegenabschnitt 25 der Abtriebswelle 5 ausgerichtet ist, sodass ein Aufsetzen des Zubehörteils 1 auf die Abtriebswelle 5 nicht möglich ist. Der Nutzer muss daher zuvor das Zubehörteil 1 relativ zu der Abtriebswelle 5 verdrehen. Um dabei das Zubehörteil 1 mit der Abtriebswelle 5 der Handwerkzeugmaschine zu koppeln, muss der Nutzer also zunächst die Stellhülse 6 in Richtung des Pfeils 29, also axial von der Abtriebswelle 5 weg, entlang der Zubehörlängsachse 3 verstellen. Hierbei wird durch die Stellhülse 6 auch der Stellring 21 beaufschlagt und mitgenommen, der wiederum die an der Zubehörspindel 4 axial verstellbar gelagerte Kopplungshülse 10 gegen die Kraft des Rückstellelements 13 axial verstellt. Dabei wird durch die an der Kopplungshülse 10 ausgebildete Kopplungsstruktur 11 und durch die Gegenkontur 12, die an der Gehäusehülse 15 ausgebildet ist, die Zubehörspindel 4 drehfest mit dem Gehäuse 7 gekoppelt, so dass ein unbeabsichtigtes Verdrehen der Zubehörspindel 4 relativ zu dem Gehäuse 7 unterbunden ist. Nun kann der Nutzer das Zubehörteil 1 relativ zu der Abtriebswelle 5 verdrehen, bis der als Außensechskant ausgebildete Verbindungsabschnitt 24 fluchtend zu dem als Innensechskant realisierten Gegenabschnitt 25 ausgerichtet ist, der an der Abtriebswelle 5 ausgebildet ist. Dieser Zustand lässt sich der Figur 2 entnehmen. Nun kann das Zubehörteil 1 auf die Abtriebswelle 5 aufgeschoben werden. Lässt der Nutzer nun die Stellhülse 6 los, die durch ein in der Zeichnung nicht dargestelltes Federelement beaufschlagt ist, so wird diese entgegen der Pfeilrichtung 29 verstellt. Hierbei wird die Kopplungshülse 10, die durch das Rückstellelement 13 beaufschlagt war, zunächst aus der Kopplungsstellung in die Freigabestellung überführt und beaufschlagt dabei seinerseits den Stellring 21, wodurch die Arretierungsmittel 8 aus der in der Figur 2 dargestellten ausgerückten Stellung in die eingerückte Stellung überführt werden, die in der Figur 3 dargestellt ist. Dabei greifen die Arretierungsmittel 8 in Kalottenflächen 33 ein, die an dem Außenumfang der Abtriebswelle 5 ausgebildet sind. In diesem Zustand ist nun das Zubehörteil 1 mit der Abtriebswelle 5 der Handwerkzeugmaschine fest verbunden.

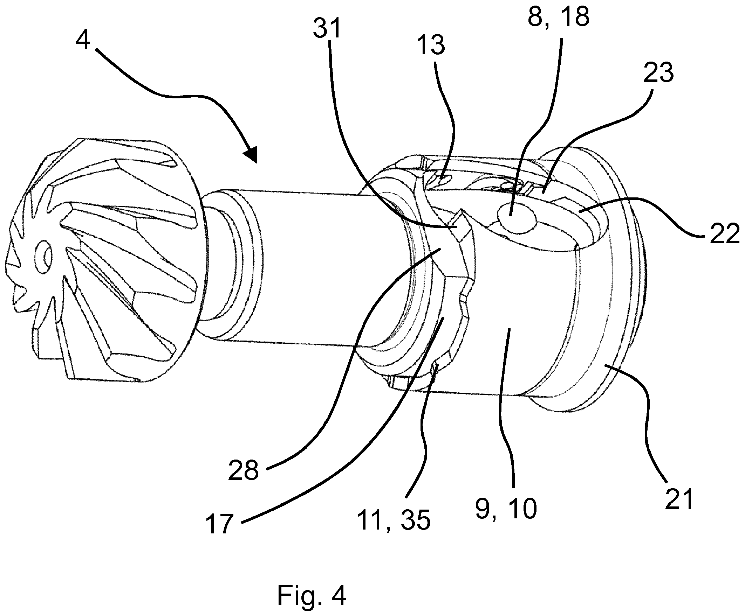

Figur 4 zeigt in einer teilgeschnittenen, perspektivischen Ansicht die Zubehörspindel 4 mit der daran gelagerten Kopplungshülse 10 sowie dem Stellring 21. Insbesondere ist hieraus auch das Rückstellelement 13 zu erkennen, das zwischen der Kopplungshülse 10 und der Zubehörspindel 4 angeordnet ist und in der Kopplungsstellung, bei der die Kopplungshülse 10 gegenüber der Zubehörspindel 4 axial in Richtung des Pfeils 29 verstellt ist, eine Rückstellkraft auf die Kopplungshülse 10 ausübt. Wie der Figur 4 weiterhin zu entnehmen ist, weist die Zubehörspindel 4 im Bereich des Trägerabschnitts 17 eine Abflachung 28 auf, die der drehfesten Führung der Kopplungshülse 10 dient.

Figur 5 zeigt in einer perspektivischen Ansicht die Gehäusehülse 15. Aus dieser Ansicht wird insbesondere die Gegenkontur 12 ersichtlich, die an der Gehäusehülse 15 ausgebildet ist und eine Gegenverzahnung 34 aufweist, in die eine korrespondierende Verzahnung 35 der Kopplungsstruktur 11 der in der Figur 6 perspektivisch dargestellten Kopplungshülse 10 in der Kopplungsstellung eingreift. Die Zahnflanken der Zähne der Verzahnungen 34, 35 sind dabei gegenüber der Zubehörlängsachse 3 um einen Winkel von 65° geneigt. Das Verhältnis zwischen der Anzahl der Zähne der Verzahnung 35 der Kopplungsstruktur 11 und der Gegenverzahnung 34 der Gegenkontur 12 ist in dem gezeigten Ausführungsbeispiel 1:2. Mit anderen Worten weist die Gegenkontur 12 doppelt so viele Zähne auf, wie die Kopplungsstruktur 11.

Der Figur 6 ist weiterhin zu entnehmen, dass in der Kopplungshülse 10 ein Aufnahmeraum 30 ausgebildet ist, in dem das Rückstellelement 13 aufgenommen wird. Dieser Aufnahmeraum 30 ist einenends durch zwei innenumfangsseitig ausgebildete Führungsabschnitte 31 und anderenends durch zwei Ringbundabschnitte 32 begrenzt. Die Führungsabschnitte 31 wechselwirken dabei mit den Abflachungen 28, die an der Zubehörspindel 4 im Bereich des Trägerabschnitts 17 ausgebildet sind, wodurch sich die Kopplungshülse 10 drehfest mit der Zubehörspindel 4 verbinden lässt.

### Bezugszeichenliste

- 1: Zubehörteil
- 2: Arretierung
- 3: Zubehörlängsachse
- 4: Zubehörspindel
- 5: Abtriebswelle
- 6: Stellhülse
- 7: Gehäuse
- 8: Arretierungsmittel
- 9: Kopplungselement
- 10: Kopplungshülse
- 11: Kopplungsstruktur
- 12: Gegenkontur
- 13: Rückstellelement
- 14: Grundgehäuse
- 15: Gehäusehülse
- 16: Werkzeugwelle
- 17: Trägerabschnitt
- 18: Kugel
- 19: Aufnahme
- 20: Winkelkopf
- 21: Stellring
- 22: Hinterschneidung
- 23: Stirnfläche
- 24: Verbindungsabschnitt
- 25: Gegenabschnitt
- 26: Vorsprung
- 27: Isolationsschicht
- 28: Abflachung
- 29: Pfeil
- 30: Aufnahmeraum
- 31: Führungsabschnitt
- 32: Ringbundabschnitt
- 33: Kalottenfläche
- 34: Gegenverzahnung
- 35: Verzahnung

## Patentansprüche

1. Zubehörteil (1) für eine Handwerkzeugmaschine, mit einer Arretierung (2) zum lösbaren Verbinden einer eine Zubehörlängsachse (3) definierenden Zubehörspindel (4) des Zubehörteils (1) an einer Abtriebswelle (5) der Handwerkzeugmaschine, wobei die Arretierung (2) eine Stellhülse (6), die zwischen einer Arretierungsstellung und einer Lösestellung verstellbar an einem Gehäuse (7) des Zubehörteils (1) gelagert ist, und mindestens ein an der Zubehörspindel (4) zwischen einer ausgerückten ersten Stellung und einer eingerückten zweiten Stellung verstellbar gelagertes Arretierungsmittel (8) umfasst zur lösbaren Verbindung der Zubehörspindel (4) mit der Abtriebswelle (5), **dadurch gekennzeichnet, dass** ein Kopplungselement (9) des Zubehörteils (1) vorgesehen ist, das zwischen einer Kopplungsstellung, in der die Zubehörspindel (4) mit dem Gehäuse (7) drehfest verbunden ist, und einer Freigabestellung verstellbar ist, in der die Zubehörspindel (4) relativ zu dem Gehäuse (7) verdrehbar ist.

2. Zubehörteil (1) nach Anspruch 1, **dadurch gekennzeichnet, dass** an dem Kopplungselement (9) eine Kopplungsstruktur (11) ausgebildet ist zur Wechselwirkung mit einer korrespondierenden Gegenkontur (12).

3. Zubehörteil (1) nach Anspruch 2, **dadurch gekennzeichnet, dass** die Kopplungsstruktur (11) und/oder die Gegenkontur (12) eine Verzahnung aufweist.

4. Zubehörteil (1) nach Anspruch 3, **dadurch gekennzeichnet, dass** das Verhältnis zwischen der Anzahl der Zähne der Verzahnung der Kopplungsstruktur (11) und der Verzahnung der Gegenkontur (12) kleiner ist als 1,0 und bevorzugt kleiner als 0,5.

5. Zubehörteil (1) nach Anspruch 3 oder 4, **dadurch gekennzeichnet, dass** die Zahnflanken der Zähne der Verzahnung zu der Zubehörlängsachse (3) einen Winkel aufweisen, der zwischen 10° und 70° und besonders bevorzugt bei 65° liegt.

6. Zubehörteil (1) nach einem der Ansprüche 1 bis 5, **dadurch gekennzeichnet, dass** das Kopplungselement (9) als eine Kopplungshülse (10) gebildet ist, die drehfest mit der Zubehörspindel (4) verbunden ist und an dieser zwischen der Kopplungsstellung und der Freigabestellung axial verstellbar gelagert ist.

7. Zubehörteil (1) nach Anspruch 6, **dadurch gekennzeichnet, dass** zwischen der Kopplungshülse (10) und der Zubehörspindel (4) ein Rückstellelement (13) derartig angeordnet ist, dass in der Kopplungsstellung eine Rückstellkraft auf die Kopplungshülse (10) ausgeübt wird.

8. Zubehörteil (1) nach Anspruch 7, **dadurch gekennzeichnet, dass** in der Kopplungshülse (10) ein Aufnahmeraum (30) für das Rückstellelement (13) ausgebildet ist, der einenends durch mindestens einen innenumfangsseitig ausgebildeten Führungsabschnitt (31) und anderenends durch mindestens einen Ringbundabschnitt (32) begrenzt ist.

9. Zubehörteil (1) nach einem der Ansprüche 2 bis 8, **dadurch gekennzeichnet, dass** das Gehäuse (7) mehrteilig gebildet ist und ein Grundgehäuse (14) und eine die Gegenkontur (12) tragende Gehäusehülse (15) umfasst.

10. Zubehörteil (1) nach einem der Ansprüche 1 bis 9, **dadurch gekennzeichnet, dass** die Zubehörspindel (4) mehrteilig gebildet ist und eine Werkzeugwelle (16) und einen Trägerabschnitt (17) mit mindestens einer Aufnahme (19) umfasst, in der das mindestens eine Arretierungsmittel (8) im Wesentlichen senkrecht zu der Zubehörlängsachse (3) radial zwischen der ausgerückten ersten Stellung und der eingerückten zweiten Stellung verstellbar gelagert ist.

11. Zubehörteil (1) nach Anspruch 10, **dadurch gekennzeichnet, dass** ein Stellring (21) vorgesehen ist zur Verstellung des mindestens einen Arretierungsmittels (8) aus der ausgerückten ersten Stellung in die eingerückte zweite Stellung.

12. Zubehörteil (1) nach einem der Ansprüche 1 bis 11, **dadurch gekennzeichnet, dass** an der Zubehörspindel (4) ein Verbindungsabschnitt (24) ausgebildet ist zur drehfesten Koppelung mit einem korrespondierenden Gegenabschnitt (25), der an der Abtriebswelle (5) ausgebildet ist.

13. Zubehörteil (1) nach einem der Ansprüche 1 bis 12, **dadurch gekennzeichnet, dass** an der Stellhülse (6) Vorsprünge (26) ausgebildet sind zur drehfesten Kopplung der Stellhülse (6) mit der Handwerkzeugmaschine.

14. Zubehörteil (1) nach einem der Ansprüche 1 bis 13, **dadurch gekennzeichnet, dass** eine das Gehäuse (7) zumindest teilweise umgreifende elektrische Isolationsschicht (27) vorgesehen ist und/oder dass das Gehäuse (7) aus einem elektrisch isolierenden Material gefertigt ist.

15. Zubehörteil (1) nach einem der Ansprüche 1 bis 14, **dadurch gekennzeichnet, dass** das Zubehörteil (1) als ein Winkelkopf (20) ausgebildet ist.

## Claims

1. An accessory part (1) for a hand-held machine tool having a lock (2) for the detachable connecting of an accessory spindle (4) of the accessory part (1) defining an accessory longitudinal axis (3) to an output shaft (5) of the hand-held machine tool, wherein the lock (2) is an adjusting sleeve (6) displaceably supported on a housing (7) of the accessory part (1) between a locking position and a release position and comprises at least one locking means (8) displaceably supported on the accessory spindle (4) between a disengaged first position and an engaged second position for the detachable connecting of the accessory spindle (4) to the output shaft (5), **characterized in that** a coupling element (9) of the accessory part (1) is provided which is displaceable between a coupling position, in which the accessory spindle (4) is non-rotatably connected to the housing (7), and a release position, in which the accessory spindle (4) is rotatable relative to the housing (7).

2. The accessory part (1) according to claim 1, **characterized in that** a coupling structure (11) is formed on the coupling element (9) for interacting with a corresponding mating contour (12).

3. The accessory part (1) according to claim 2, **characterized in that** the coupling structure (11) and/or the mating contour (12) exhibit(s) toothing.

4. The accessory part (1) according to claim 3, **characterized in that** the ratio of number of teeth of the toothing of the coupling structure (11) and the toothing of the mating contour (12) is less than 1.0 and preferably less than 0.5.

5. The accessory part (1) according to claim 3 or 4, **characterized in that** the tooth flanks of the teeth of the toothing have an angle to the accessory longitudinal axis (3) of between 10° and 70° and particularly preferentially 65°.

6. The accessory part (1) according to one of claims 1 to 5, **characterized in that** the coupling element (9) is formed as a coupling sleeve (10) non-rotatably connected to the accessory spindle (4) and supported axially dispaceable thereon between the coupling position and the release position.

7. The accessory part (1) according to claim 6, **characterized in that** a reset element (13) is arranged between the coupling sleeve (10) and the accessory spindle (4) such that a restoring force is exerted on the coupling sleeve (10) in the coupling position.

8. The accessory part (1) according to claim 7, **characterized in that** a receiving area (30) for the reset element (13), which is limited on one end by at least one guide section (31) formed on the inner circumference and on the other end by at least one collar section (32), is formed in the coupling sleeve (10).

9. The accessory part (1) according to one of claims 2 to 8, **characterized in that** the housing (7) is of multi-part configuration and comprises a base housing (14) and a housing sleeve (15) which supports the mating contour (12).

10. The accessory part (1) according to one of claims 1 to 9, **characterized in that** the accessory spindle (4) is of multi-part configuration and comprises a tool shaft (16) and a supporting section (17) having at least one seating (19) in which the at least one locking means (8) is supported radially displaceably between the disengaged first position and the engaged second position substantially perpendicular to the accessory longitudinal axis (3).

11. The accessory part (1) according to claim 10, **characterized in that** an adjusting ring (21) is provided for the displacing of the at least one locking means (8) from the disengaged first position into the engaged second position.

12. The accessory part (1) according to one of claims 1 to 11, **characterized in that** a connecting section (24) is formed on the accessory spindle (4) for the non-rotatable coupling with a corresponding mating section (25) formed on the output shaft (5).

13. The accessory part (1) according to one of claims 1 to 12, **characterized in that** projections (26) are formed on the adjusting sleeve (6) for the non-rotatable coupling of the adjusting sleeve (6) to the hand-held machine tool.

14. The accessory part (1) according to one of claims 1 to 13, **characterized in that** an electrically insulating layer (27) is provided which extends at least partially around the housing (7) and/or that the housing (7) is made of an electrically insulating material.

15. The accessory part (1) according to one of claims 1 to 14, **characterized in that** the accessory part (1) is designed as an crosshead (20).

## Revendications

1. Accessoire (1) pour une machine-outil manuelle, avec un système d'arrêt (2) pour relier de manière amovible une broche d'accessoire (4), définissant un axe longitudinal d'accessoire (3), de l'accessoire (1) sur un arbre de sortie (5) de la machine-outil manuelle, dans lequel le système d'arrêt (2) comprend une douille de réglage (6), qui est montée sur un boîtier (7) de l'accessoire (1) de manière à pouvoir être ajustée entre une position d'arrêt et une position de déblocage, et au moins un moyen d'arrêt (8) monté sur la broche d'accessoire (4) de manière à pouvoir ajusté entre une première position débrayée et une deuxième position embrayée pour relier de manière amovible la broche d'accessoire (4) à l'arbre de sortie (5), **caractérisé en ce qu'**est prévu un élément de couplage (9) de l'accessoire (1), qui peut être ajusté entre une position de couplage, dans laquelle la broche d'accessoire (4) est reliée de manière solidaire en rotation au boîtier (7), et une position de libération, dans laquelle la broche d'accessoire (4) peut être tournée par rapport au boîtier (7) .

2. Accessoire (1) selon la revendication 1, **caractérisé en ce qu'**une structure de couplage (11) est réalisée sur l'élément de couplage (9) pour interagir avec un contre-contour (12) correspondant.

3. Accessoire (1) selon la revendication 2, **caractérisé en ce que** la structure de couplage (11) et le contre-contour (12) présentent une denture.

4. Accessoire (1) selon la revendication 3, **caractérisé en ce que** le rapport entre le nombre des dents de la denture de la structure de couplage (11) et la denture du contre-contour (12) est inférieur à 1,0 et de manière préférée est inférieur à 0,5.

5. Accessoire (1) selon la revendication 3 ou 4, **caractérisé en ce que** les flancs de dents des dents de la denture forment par rapport à l'axe longitudinal d'accessoire (3) un angle, qui est compris entre 10° et 70° et en particulier est de manière préférée de l'ordre de 65°.

6. Accessoire (1) selon l'une quelconque des revendications 1 à 5, **caractérisé en ce que** l'élément de couplage (9) est formé en tant qu'une douille de couplage (10), qui est reliée de manière solidaire en rotation à la broche d'accessoire (4) et est montée de manière à pouvoir être ajustée axialement entre la position de couplage et la position de libération.

7. Accessoire (1) selon la revendication 6, **caractérisé en ce qu'**un élément de rappel (13) est disposé entre la douille de couplage (10) et la broche d'accessoire (4) de telle manière qu'une force de rappel est exercée sur la douille de couplage (10) dans la position de couplage.

8. Accessoire (1) selon la revendication 7, **caractérisé en ce qu'**est réalisé, dans la douille de couplage (10), un espace de logement (30) pour l'élément de rappel (13), qui est délimité sur une extrémité par au moins une section de guidage (31) réalisée côté périphérie intérieure et sur une autre extrémité par au moins une section de collet annulaire (32).

9. Accessoire (1) selon l'une quelconque des revendications 2 à 8, **caractérisé en ce que** le boîtier (7) est formé en plusieurs parties et comprend un boîtier de base (14) et une douille de boîtier (15) supportant le contre-contour (12).

10. Accessoire (1) selon l'une quelconque des revendications 1 à 9, **caractérisé en ce que** la broche d'accessoire (4) est formée en plusieurs parties et comprend un arbre d'outil (16) et une section de support (17) avec au moins un logement (19), dans lequel l'au moins un moyen d'arrêt (8) est monté de manière à pouvoir être ajusté radialement entre la première position débrayée et la deuxième position embrayée de manière sensiblement perpendiculaire par rapport à l'axe longitudinal d'accessoire (3) .

11. Accessoire (1) selon la revendication 10, **caractérisé en ce qu'**un anneau de réglage (21) est prévu pour ajuster l'au moins un moyen d'arrêt (8) depuis la première position débrayée dans la deuxième position embrayée.

12. Accessoire (1) selon l'une quelconque des revendications 1 à 11, **caractérisé en ce qu'**est réalisée sur la broche d'accessoire (4) une section de liaison (24) destinée à être couplée de manière solidaire en rotation à une contre-section (25) correspondante, qui est réalisée sur l'arbre de sortie (5).

13. Accessoire (1) selon l'une quelconque des revendications 1 à 12, **caractérisé en ce que** des parties faisant saillie (26) sont réalisées sur la douille de réglage (6) pour coupler de manière solidaire en rotation la douille de réglage (6) à la machine-outil manuelle.

14. Accessoire (1) selon l'une quelconque des revendications 1 à 13, **caractérisé en ce qu'**une couche d'isolation électrique (27) entourant au moins en partie le boîtier (7) est prévue, et/ou que le boîtier (7) est produit à partir d'un matériau d'isolation électrique.

15. Accessoire (1) selon l'une quelconque des revendications 1 à 14, **caractérisé en ce que** l'accessoire (1) est réalisé en tant qu'une tête d'angle (20).
